# EUROPÄISCHE PATENTSCHRIFT

(11) **EP 2 938 478 B1**
(45) Veröffentlichungstag und Bekanntmachung des Hinweises auf die Patenterteilung: **19.08.2020**
(21) Anmeldenummer: 13824488.4
(22) Anmeldetag: 24.12.2013
(51) Int. Cl.: B29C 70/34, B29C 70/56, B29B 11/16

(54) **VERFAHREN UND VORRICHTUNG ZUM HERSTELLEN VON DREIDIMENSIONALEN FASERGELEGEN UND BAUTEILVORFORMLINGEN AUS FASERN IN ZWEI STUFEN**
METHOD AND DEVICE FOR PRODUCING THREE-DIMENSIONAL LAID FIBRE SCRIMS AND COMPONENT PREFORMS MADE OF FIBRES IN TWO STEPS
PROCÉDÉ ET DISPOSITIF DE PRODUCTION DE NAPPES FIBREUSES TRIDIMENSIONNELLES ET D'ÉBAUCHES DE PIÈCES À PARTIR DE FIBRES EN DEUX ÉTAPES

(30) Priorität: 28.12.2012 DE 102012025297
(43) Veröffentlichungstag der Anmeldung: 04.11.2015
(73) Patentinhaber: Compositence GmbH, 71229 Leonberg (DE)
(72) Erfinder: KARB, Ingo, 71229 Leonberg (DE); WITZEL, Volker, 74369 Löchgau (DE)
(74) Vertreter: Kramer Barske Schmidtchen Patentanwälte PartG mbB
(86) Internationale Anmeldenummer: PCT/EP2013/003940
(87) Internationale Veröffentlichungsnummer: WO 2014/102015

(56) Entgegenhaltungen:
- DE-A1-102004 038 706
- DE-A1-102012 010 497
- US-A- 3 115 678
- US-A- 6 114 012
- US-A1- 2011 291 325

## Beschreibung

Die Erfindung betrifft ein Verfahren und Vorrichtungen zum Herstellen von dreidimensionalen Gelegen und Bauteilvorformlingen aus Fasern.

Bei der Herstellung von dreidimensionalen Vorformlingen und Prestacks direkt aus Endlosfasern werden heute Fasern von Spulen abgewickelt und mit verschiedensten Mitteln auf einen Kern oder allgemein Werkstückträger abgelegt. Die Kontur des Kerns ähnelt der Bauteilkontur in Dimension und Gestalt. Das Ablegen passiert in der Regel unter geringer oder hoher Zugspannung so, dass die Fasern konkave Bereiche im Werkstückträger überspannen, sofern sie nicht durch besondere Maßnahmen in solchen konkaven Bereichen gehalten werden.

Ein solches Verfahren ist beispielsweise aus der DE 10 2010 015 199 A1 bekannt.

Maßnahmen zum Halten der Fasern in einem konkaven Bereich sind heute in der Regel beispielsweise Stoffschluss der abzulegenden Fasern am Werkstückträger oder an bereits abgelegten Fasern so, dass sich die Fasern bei Zugspannungen nicht aus dem konkaven Bereich lösen. Dies bedeutet, dass ein Andrückwerkzeug vorhanden sein muss, welches die Fasern in die konkaven Zonen drückt und bis zum ausreichenden Anhaften durch Stoffschluss, beispielsweise Kleben, angedrückt hält. Insbesondere bei kleinen Krümmungsradien konkaver Zonen ist dies nicht mehr mit universell geformten Andrückwerkzeugen wie z.B. Anpressrollen zu schaffen, da deren Elastizität überschritten würde. Die Prozessgeschwindigkeit wird zudem durch die Notwendigkeit der Entstehung des Stoffschlusses begrenzt.

Eine weitere Möglichkeit ist, mehrere sich kreuzende Fasern vorzusehen, welche bei gleichzeitigem Auftrag durch ihre Zugspannung ein Anliegen des Geleges im konkaven Bereich gewährleisten. Dies bedingt, dass mindestens eine dieser Fasern einen rein konvexen Verlauf entlang des WST annimmt, um mittels ihrer durch Zugspannung entstehenden Radialspannung andere Fasern mit konkavem Verlauf an die Oberfläche des Werkstückträgers anzudrücken. Hierzu sind Überkreuzungen der Fasern notwendig, wobei die Fasern bzw. Faser mit konvexem Verlauf zumindest bei einigen Kreuzungen auf den Fasern mit konkavem Verlauf liegen müssen bzw. muss. Dies bedingt, dass die konvex verlaufende Faser mit größerem Abstand zur Oberfläche des Werkstückträgers verlaufen kann.

Alternativ kann das Fasergelege auf den Werkstückträger durch Unterdruck angesaugt und festgehalten werden. Bei diesem Verfahren müssen die Fasern in die Nähe der Oberfläche des Werkstückträgers geführt werden, um von einem Luftstrom durch die Oberfläche des Werkstückträgers in diesen hinein an die Oberfläche angesaugt und daran festgehalten zu werden.

Weitere Vorrichtungen und Verfahren zum Herstellen von Faserverbundbauteilen oder - werkstoffen sind aus der DE 10 2004 038706 A1, der US 6,114,012 A, der DE 10 2012 010497 A1, der US 3,115,678 A und der US 2011/29135 A1 bekannt.

Alle genannten Maßnahmen können zu Einbußen in der Produktivität oder der Gestaltungsfreiheit des Bauteiles führen oder unterliegen in ihrer Anwendung Restriktionen. In der Regel sind daher Formen mit rein konvexer Gestalt schneller und mit höherer Prozesssicherheit herstellbar.

Aufgabe der vorliegenden Erfindung ist es daher, die Herstellung von beliebigen dreidimensionalen Fasergelegen bzw. Vorformlingen oder Prestacks mit konvexen und konkaven Bereichen ohne die genannten Nachteile zu ermöglichen.

Diese Aufgabe wird gelöst durch ein Verfahren gemäß dem unabhängigen Anspruch 1 und und eine Vorrichtung gemäß dem unabhängigen Anspruch 5. Weiterbildungen sind in den abhängigen Ansprüchen angegeben.

Das Verfahren arbeitet in zwei Stufen. In der ersten Stufe erfolgt die Primärformgebung von losen Fasern zu einem Körper mit mindestens einem konvexen Bereich. Dieser Körper weist eine einer Rohgeometrie bzw. Primärform auf. Bevorzugt ist der Körper ein offenes insgesamt konvexes Profil (offener Profilkörper). Bei einem offenen Profil, wie beispielsweise einem U-förmigen Profil, ist normalerweise eine Oberfläche, die von der einen Seite betrachtet konvex ist, von er anderen Seite betrachtet konkav. Im Folgenden wird daher, wenn von einem konvexen Körper gesprochen wird, davon ausgegangen, dass dessen Oberseite bzw. Außenseite von oben oder außen betrachtet (z.B. sichtbare Seite beim Aufsetzen auf einen Werkstückträger) konvex ist. Bei einem Körper, der aus einem Fadengelege ausgebildet wird, ist dies soll dies die Außenseite die Seite des Körpers sein, die nicht auf einem Werkstückträger zum Ausbilden des Körpers abgelegt wird.

In einer Querschnittsansicht ist ein solcher "konvexer Bereich" oder "konvex" ausschließlich in einer positiven (links) oder negativen (rechts) Richtung (je nach Betrachtungsweise) gekrümmt, oder der ausschließlich aus positiv oder negativ gekrümmten Abschnitten und ebenen Abschnitten ausgebildet. Als "konkaver Bereich" soll hier und im Folgenden ein Bereich verstanden werden, der in einer Querschnittsansicht ausschließlich in der zu dem konvexen Bereich entgegengesetzten Richtung gekrümmt ist, oder der ausschließlich aus in entgegengesetzter Richtung gekrümmten Abschnitten und ebenen Abschnitten ausgebildet ist.

In der zweiten Stufe erfolgt die Sekundärformung der Primärform in eine Sekundärform bzw. Fertiggeometrie, die wenigstens einen, gesehen in der Ablegerichtung der Fasern bzw. in oder aus derselben oben genannten ersten Richtung betrachtet, konkaven Bereich aufweist. Hierbei ist die erste Richtung bezüglich nicht umgeformter Bereiche des Körpers und/oder verwendeter Umformvorrichtungen ortsfest.

Detaillierter bedeutet dies: in der Primärformgebung wird in einem 3D fähigen Ablageprozess für Endlosfasern und ggf. Zusatzstoffen ein hauptsächlich konvexer Vorformling (oder ein Prestack) aus Endlosfasern hergestellt. Hauptsächlich konvex bedeutet, der Körper weist mindestens einen konvexen Bereich (konvexe Oberfläche) auf. Der Vorformling ist ein Fasergelege bestehend z.B. aus Rovings, Fasern oder Filamenten, z.B. der Materialien Kohlenstoff, Glas, Basalt, Aramid, die als Verstärkungsfasern bezeichnet werden, sofern Sie in einem weiteren vorgelagerten oder nachgeschalteten Prozessschritt durch die Verbindung mit einem Matrixmaterial z.B. Kunststoff zu einem Verbundwerkstoff ergänzt werden. Ein Roving ist ein Faden, der aus einer Mehrzahl von Filamenten aus dem Faserwerkstoff besteht, die man als die eigentlichen Fasern bezeichnen könnte. Ein solcher Roving kann aus einigen wie z.B. 8 oder 10 Filamenten bis zu z.B. 50000 Filamenten bestehen. In dieser Anmeldung bezeichnet der Begriff Faser bevorzugt einen Roving.

Die Geometrie des so zuerst ausgebildeten Körpers wird als Rohgeometrie bzw. Primärform bezeichnet, da sie bereits Ähnlichkeit mit dem Zielbauteil aufweist, indem sie z.B. ähnliche Abmessungen, eine ähnliche Gestalt oder auch ein ähnliches Tiefziehverhältnis hat. Bevorzugt ist eine von durch einen Querschnitt der Primärform aufgespannte Fläche größer als die entsprechende vom Querschnitt des Zielbauteils aufgespannte Fläche.

Die Fasern, die die Rohgeometrie ausbilden, weisen eine ähnliche bzw. bevorzugt gleiche Faserlänge auf wie diese, die später für die Fertiggeometrie benötigt werden. Die Rohgeometrie ist im Bezug auf die abzulegenden Fasern bevorzugt rein konvex, so dass alle Fasern des Vorformlings (Prestack) im Primärformungsprozess zügig und definiert abgelegt werden können.

Der Ableitung der Rohgeometrie (Primärform) aus der Fertiggeometrie (Sekundärform), das heißt dem Berechnen, wie die Rohgeometrie auszusehen hat, um aus ihr die gewünschte Fertiggeometrie ausbilden zu können, kommt eine große Bedeutung zu, da sie die notwendigen Freiheitsgrade der Fasern bei der Umformung der Rohgeometrie in die Fertiggeometrie beeinflusst. Hierfür werden bevorzugt Computerprogramme verwendet (z.B. CAD, FEM Programme sowie mathematische Optimierungsalgorithmen).

Bevorzugtes Ziel für das Auswählen der Form der Rohgeometrie ist es, dass die Rohgeometrie wenigstens abschnittsweise, bevorzugt vollständig die identischen Faserlängen beinhaltet, wie sie für die Fertiggeometrie benötigt werden. Identische Faserlängen bedeutet dabei, dass der Abschnitt oder Bereich einer Faser, der einen bestimmten umzuformenden (konvexen) Bereich der Rohgeometrie ausbildet, identisch mit dem Abschnitt oder Bereich derselben Faser ist, der den entsprechenden umgeformten Bereich der Fertiggeometrie ausbildet. Trifft dies für alle Fasern zu, ist auch die Fläche des konvexen Bereichs, der in den konkaven Bereich umgeformt werden soll, bevorzugt gleich der Fläche, des konkaven Bereichs nach der Umformung. Somit ist es möglich durch reine Biegung des Rohgeometrie-Vorformlings und ohne Verzerrung der Faserorientierung den Fertiggeometrie-Vorformling zu erhalten.

Kann dieses Ziel nicht vollständig erreicht werden, muss die Rohgeometrie beispielsweise minimal kürzere Faserlängen beinhalten. Mit anderen Worten, die Bereiche oder Abschnitte der Fasern, die die Rohgeometrie ausbilden weisen eine Länge auf, die minimal kürzer ist als die Länge der Abschnitte oder Bereiche derselben Fasern, die nach der Umformung die Fertiggeometrie ausbilden. In diesem Fall werden bei der Umformung zur Fertiggeometrie zu Fasern, die eigentlich gedehnt werden müssten (Dehnung der oben genannten Fasern ist aber nur sehr begrenzt möglich) vom Rand nachgezogen. Da am Rand bevorzugt eine entsprechende Reserve vorgehalten wird, kann ein "einschnüren" des Körpers beim Umformen vermieden werden. Mit anderen Worten, der Primärkörper weist an seinem Rand einen Reservebereich von Fasern auf, der nach der Umformung bevorzugt, aufgrund des Nachrutschens, aufgebraucht ist.

Das Nachrutschen bzw. Nachziehen von Fasern birgt allerdings die Gefahr, dass Fasern bzw. Faserlagen, welche mit der nachrutschenden Faser bzw. Faserlage in Kontakt stehen, ebenfalls mitgezogen werden, was zu einem leichten Verzug der Faserorientierungen führen kann. Es ist deshalb vorteilhaft, wenn die Längendifferenzen der Fasern in Roh- und Fertiggeometrie kleinstmöglich sind. Um ein Mitziehen der Fasern zu vermeiden bzw. zu verringern werden die Fasern im Randbereich der Rohgeometrie vor dem Umformen fixiert bzw. festgehalten oder geklemmt. Das Festhalten erfolgt dabei so, dass einzelne Fasern nachrutschen können, aber die übrigen Fasern fixiert sind.

Die Umformung des im Bezug auf die enthaltenen Fasern konvexen Vorformlings in die gewünschte konvex/konkave Form des Zielbauteils passiert nach dem Primärformungsprozess bzw. nach jeweils einem Teilschritt des Primärformgebungsprozesses. Dabei werden zunächst der Vorformling (Primärform) bzw. Teilbereiche des Vorformlings fixiert, welche nicht oder erst in späteren Stadium umgeformt werden. Bevorzugt werden mindestens zwei Bereiche fixiert, die einander gegenüber liegen, wobei der umzuformenden Bereich in einer Querschnittsansicht gesehen zwischen den mindestens zwei sich gegenüberliegenden fixierten Bereichen liegt.

Die Fixierung erfolgt durch Einklemmen des Vorformlings zwischen festen oder elastischen Formteilen. Besonders zu erwähnen ist die neuartige Klemmung von Fasern durch einen mit Druck beaufschlagbaren Balg bzw. Schlauch oder durch eine Sintermetalloberfläche, die mit Vakuum versorgt ist.

Die Umformung selbst erfolgt beispielsweise durch das Einfahren von Stempeln in den Vorformling. Die Stempel können fester Gestalt sein oder auch aus elastischem Material oder als mit fluiden Medien füllbarer und ausdehnbarer Balg ausgeführt sein. Es kann dabei eine Gegenform notwendig sein, in die der zu verformende Bereich des Vorformlings durch den Stempel eingepresst wird.

Mit dem vorliegenden Verfahren kann daher ein dreidimensionaler Körper aus einem Fasergelege hergestellt werden, der mindestens einen konkaven Bereich aufweist und bei dem die Fasern des Fasergeleges zueinander definiert und reproduzierbar in dem Körper angeordnet sind. Deutlich wird der Vorteil dieses Vorgehens insbesondere im Vergleich zu konventionellen Formgebungsverfahren, bei denen aus ebenen Faserhalbzeugen dreidimensionale Schalen erzeugt werden. Hier sind je nach Tiefe der herzustellenden Form erhebliche Faserlängenunterschiede zwischen der Projektion der Bauteilform auf die Halbzeugebene und der dreidimensionalen Form vorhanden. Beim sogenannten Drapieren (Tiefziehen) des ebenen textilen Halbzeuges in die Bauteilform entsteht deutlicher Verzug der Orientierungen. Zum Teil ist dieser Prozess nicht faltenfrei möglich und schränkt somit die Gestaltungsfreiheit von Bauteilen bei vertretbarem Aufwand stark ein.

Der Werkstückträger für die Rohgeometrie und das Werkzeug bzw. die Werkzeuge für die Umformung (Nachformwerkzeug bzw. Nachformvorrichtung) können getrennte Bauteile sein. Die Umformung kann aber auch auf dem Werkstückträger zur Primärformung erfolgen. Dieser wird dann mit einem Werkzeugoberteil ergänzt oder weist einen flexiblen Bereich auf. Mit "flexiblen" Bereich ist im Folgenden ein Bereich oder eine Oberfläche gemeint, die variable verformbar ist.

Der Werkstückträger, das Unterteil und/oder das Oberteil der Nachformvorrichtung können auch in Teilbereichen eine variierbare Geometrie (flexible Bereiche) aufweisen. Die Variation kann dabei durch Schieber aus festem oder elastischen Material erfolgen oder durch Einbringen bzw. Auslassen eines fluiden Mediums in eine verformbare Vorrichtung, wie z.B. einen Balg.

Sollte das Gelege neben Fasern Zusatzstoffe enthalten, die einen Zusammenhalt der Fasern bewirken, so muss dieser Zusammenhalt für die Phase der Umformung aufgehoben oder in seiner Wirkung vermindert werden. Bei Harzen oder Bindern, welche thermisch aktiviert/reaktiviert werden, passiert das durch Erwärmung des Vorformlings.

Als weitere Variante können bei der Sekundärformung Folien, Membranen oder netzartige Materialen zwischen dem Vorformling und den formgebenden Werkzeugen eingelegt werden, die dem Schutz der Fasern, der Steuerung des Restverzuges bzw. zur Vermeiden des Anhaftens von Binderbeschichteten Fasern am Werkzeug eingesetzt werden.

In einer Variante des Primärformgebungsprozesses werden eine oder mehrere konkave Zonen direkt beim Legen der Fasern auf den Werkstückträger eingebracht. Dazu werden die Fasern zunächst am Werkstückträger fixiert und über die konkave Zone hinweg gespannt. Ein Stempel drückt die noch nicht weiter fixierten Fasern in die konkave Zone ein und verbleibt so lange in dieser Position, bis die Fasern im weiteren Verlauf ausreichend am Werkstückträger fixiert sind. Sofern notwendig werden die Fasern in der konkaven Zone durch Unterdruck oder Stoffschluss gehalten, so dass der Stempel wieder entfernt werden kann.

Der oben genannte durch Druckluft oder mit unter Druck stehender Flüssigkeit befüllbare ausdehnbare Körper bzw. Balg zum Einklemmen des Vorformlings ist beispielsweise ein Schlauch. Durch die Verwendung eines solchen ausdehnbaren Körpers können in einem weiten Toleranzbereich der Dicke des zu klemmenden Materials immer gleiche Klemmkräfte aufgebracht werden, die in der Hauptsache vom Fülldruck und der Kontaktfläche des ausdehnbaren Köpers mit dem zu klemmenden Material abhängen. Die bei Fasergelegen üblichen Dickentoleranzen können bei Verwendung von festen oder elastischen Klemmeinheiten zu einer lokalen Variation der Klemmkräfte und damit zu der Gefahr von unregelmäßigen Haltekräften und Spannungen im Gelege führen. Von Vorteil ist insbesondere eine Schlauchform oder Körperform, welche schon bei geringer Steigerung des Fülldruckes den nahezu vollständigen Kontakt zu dem zu klemmenden Material herstellen kann. Zum einen kann dann die Klemmkraft linear mit dem Fülldruck variiert werden, da die Kontaktfläche weitgehend gleich bleibt. Weiterhin von Vorteil ist, dass nicht wesentliche Anteile des zur Verfügung stehenden maximalen Fülldruckes für die Herstellung des Kontaktes zu dem zu klemmenden Material benötigt werden. Somit steht ein großer Druckbereich bis zum Maximaldruck zur Steigerung der Klemmkraft zur Verfügung.

Bevorzugt wird ein solcher ausdehnbarer Körper als rechteckiger Druckschlauch oder Balg ausgeführt. Dieser kann auch durch Formung eines zunächst runden Schlauches mittels eines Einsatzes zum Aufspannen in die rechteckige Form erreicht werden. Minimale Anforderung an den Klemmschlauch ist zumindest, dass er eine Fläche in Form der Klemmfläche (z.B. ebene Fläche) aufweist. Der beschriebene Schlauch kann auch durch das Überspannen eines beliebig geformten Druckraumes mit einer Membran gebildet werden.

Als eine weitere nicht erfindungsgemäße Alternative zur Fixierung von Fasern wird die Fixierung mittels Vakuum bzw. Unterdruck, der in Poren einer Sintermetalloberfläche angelegt wird, angegeben. Der Unterdruck in den Poren wird üblicherweise erzeugt, indem in einer Kammer unterhalb der Sintermetalloberfläche ein Vakuum bzw. Unterdruck angelegt wird, so dass ein gleichmäßig großer Luftstrom durch alle Bereiche der Oberfläche zustande kommt. Innerhalb des Sintermetalls existiert dann ein Druckgradient, der innen den maximalen Unterdruck aufweist. Außerhalb des Sintermetalls und des Fasergeleges herrscht Umgebungsdruck.

Das Fixieren von dünnen Gegenständen wie Papier, Folien oder Stoffen durch Vakuum ist heute Stand der Technik. Zur Aufrechterhaltung des zum Fixieren nötigen Unterdruckes ist jedoch wichtig, dass nur geringe Luftmengen neben dem anzusaugenden Material in das System strömen können. Wenn das zu fixierende Material jedoch nur einen Teil der durchströmbaren Fixierfläche abdeckt, kann die Luft in den nichtabgedeckten Bereichen einströmen und führt zu einem Abfall des Unterdruckes in der Fixierfläche.

Zur Fixierung von Fasergelegen, wie sie oben in dem oben angegebenen Verfahren bei der Primärformgebung und insbesondere bei der Sekundärformgebung erforderlich ist, ist dies von besonderer Bedeutung, da die Fixierflächen streifenweise bzw. fadenweise belegt werden und somit vor vollständiger Bedeckung der Fixierfläche mit herkömmlichen Vakuumsaugtischen keine ausreichende Fixierung erlangt werden kann. Auch bei unterschiedlicher Anzahl von Faserlagen kommt es zu teilweise stark unterschiedlichen Durchströmungen und damit zu lokal unterschiedlicher starker Fixierung. Um nun eine gleichmäßige Durchströmung aller Bereiche mit nur geringer Abhängigkeit vom Bedeckungsgrad zu erhalten, muss die Durchströmung in einer Art gedrosselt werden, dass der lokale Durchströmungswiderstand geringere Abhängigkeit von der Bedeckung der Fixerfläche hat. Dies kann beispielsweise durch die Verwendung von porösen Materialien, wie z.B. Geweben oder Vlies-Materialien, erfolgen.

Als Auflage für Carbonfasern sind nur glattflächige Materialien ohne Mikrorauhigkeit mit Hinterschnitten sinnvoll, da sich sonst die feinen Filamente einhaken können und eine Behinderung beim Wiederabheben verursachen.

Überraschend wurde herausgefunden, dass feinstporige Sintermetalle diese Bedingungen erfüllen. Durch die Struktur der Oberfläche, welche aus gepressten, kugelförmigen Partikeln aus Metall besteht, entstehen keine Hinterschnitte, in die Filamente einhaken können. Mit sehr geringen Partikelgrößen kann die Oberfläche weitgehend glatt gestaltet werden und der Durchflusswiderstand ist schon bei geringen Materialstärken ausreichen hoch, um eine Vergleichmäßigung der Durchströmung der Fixierfläche zu erreichen.

Weitere Vorteile und Zweckmäßigkeiten der vorliegenden Lehren ergeben sich aus der Beschreibung von Ausführungsbeispielen anhand der Figuren. Von den Figuren zeigen:
- Fig. 1: eine perspektivische Ansicht eines beispielhaften Werkstückträgers und einer beispielhaften Ablegevorrichtung zum Ausbilden eines Gelegekörpers mit einer Primärform,
- Fig. 2: in (a) eine perspektivische Ansicht eines beispielhaften Werkstückträgers, und in (b), (c) und (d) verschiedene Schritte zum Ausbilden der Primärform,
- Fig. 3a) bis 3d): verschiedene Schritte zum Ausbilden einer Sekundärform aus der Primärform nach einem Verfahren und mit einer Vorrichtung gemäß einem ersten Beispiel,
- Fig. 4: eine schematische Querschnittsansicht der Primärform gemäß dem ersten Beispiel und der aus dieser Primärform ausgebildeten Sekundärform,
- Fig. 5: eine dreidimensionale Darstellung der Sekundärform gemäß dem ersten Beispiel und des Querschnittes der ihr zugrunde liegenden Primärform,
- Fig. 6a) bis d): verschiedene Schritte zum Ausbilden einer Sekundärform aus einer Primärform nach einem Verfahren und mit einer Vorrichtung gemäß einem zweiten Beispiel,
- Fig. 7a) bis c): verschiedene Schritte zum Ausbilden einer Sekundärform aus der Primärform nach einem Verfahren und mit einer Vorrichtung gemäß einem dritten Beispiel,
- Fig. 8a) bis d): verschiedene Schritte zum Ausbilden einer Sekundärform aus der Primärform nach einem Verfahren und mit einer Vorrichtung gemäß einer ersten Ausführungsform der Erfindung,
- Fig. 9a) bis d): verschiedene Beispiele von Primärformen und den daraus formbaren Sekundärformen,
- Fig. 10a) bis d): verschiedene Schritte zum Ausbilden einer Primärform nach einem weiteren Beispiel, und
- Fig. 11a) bis d): verschiede Varianten einer Klemmvorrichtung.

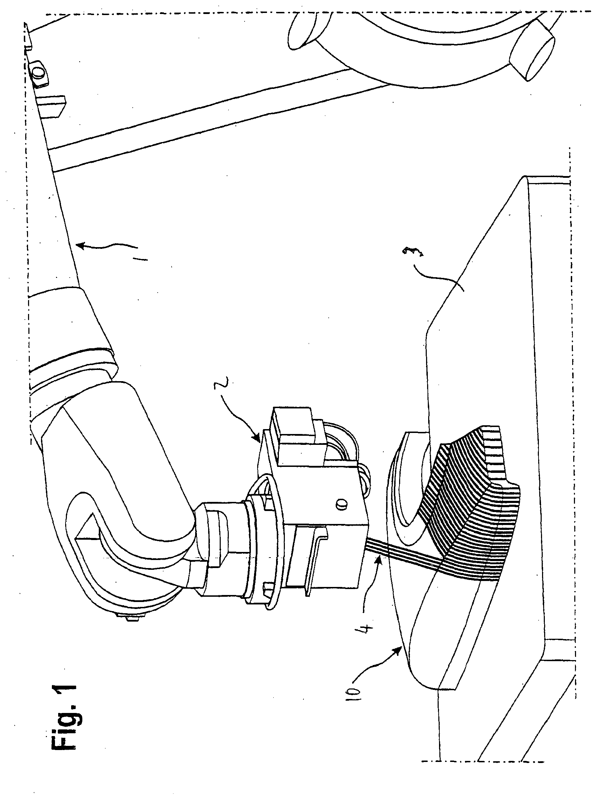

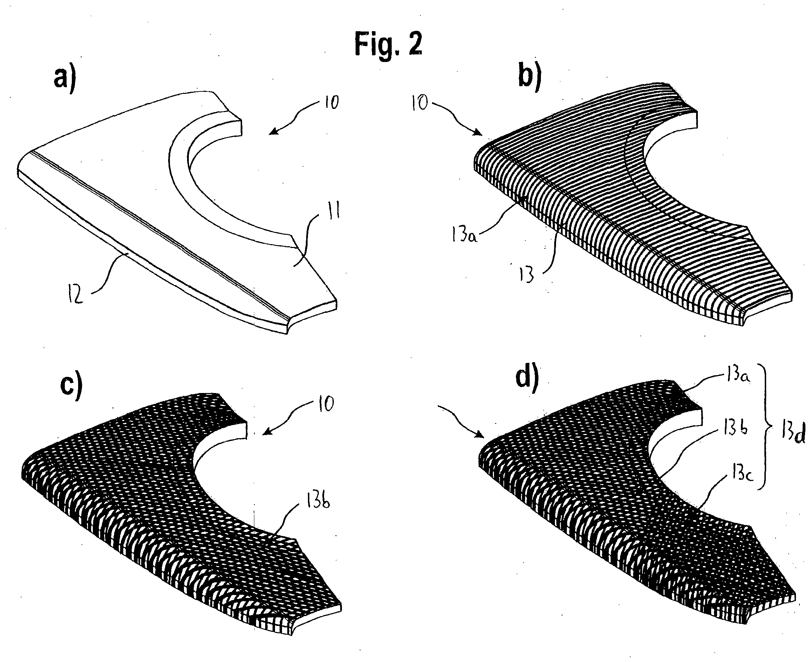

In den Figuren 1 und 2 a) bis d) ist beispielhaft das Ausbilden eines dreidimensionalen Fasergeleges mit einer Primärform dargestellt. Fig. 1 zeigt einen Roboter 1, an dem ein Legekopf 2 befestigt ist. Ein Werkstückträger 10 ist auf einer Halterung 3 für den Werkstückträger 10 gehalten. In Fig. 1 ist schematisch gezeigt, dass der Legekopf 2 zum Ablegen einer Faserschar 4 auf den Werkstückträger 10 ausgebildet ist. In Fig. 1 sind lediglich vier Fasern in der Faserschar 4 gezeigt. Die Faserschar 4 kann eine Mehrzahl n von Fasern aufweisen, mit n = 2,3.... Bevorzugt ist n = 8 oder n =16 oder n = 32.

Die Anordnung dient zum Aufbau eines dreidimensionalen Vorformlings (Körper in Primärform) für ein Bauteil aus einem Faserverbundwerkstoff. Der Faserverbundwerkstoff ist beispielsweise ein dreidimensionales multiaxiales Gelege (3D-MAG).

Wie in Fig. 2a) gezeigt ist, weist der Werkstückträger 10 dafür einen Werkstückformbereich 11 und einen Randfixierbereich 12 auf. Der Werkstückformbereich 11 entspricht der gewünschten dreidimensionalen Gestalt des Vorformlings. Randfixierbereich 12 dient zum Fixieren der trocken abgelegten Fasern 13 im Randbereich des Werkstückträgers 10, wie nachfolgend noch genauer erläutert wird.

In Fig. 2b) ist der Werkstückträger 10 mit einer ersten Faserlage 13a, die auf dem Werkstückträger 10 in einer ersten Orientierung (= axialen Ausrichtung) abgelegt worden ist, gezeigt. Wie in Fig. 2b) angedeutet ist, besteht die Faserlage 13a aus Fasern (Rovings) 13, die in dieser axialen Richtung abgelegt wurden. In Fig. 2c) ist derselbe Werkstückträger 10 gezeigt, auf dem eine zweite Faserlage 13b über der ersten Faserlage 13a abgelegt wurde. Die Fasern der zweiten Faserlage 13b haben eine Orientierung von -45° relativ zur Orientierung der ersten Faserlage 13a. In Fig. 2d) ist gezeigt, wie eine dritte Faserlage 13c über der zweiten Faserlage 13b abgelegt ist, wobei diese nur auf einem Teil des Werkstückträgers 10 abgelegt wurde. Die dritte Lage 13c hat eine Orientierung von +45° relativ zur ersten Lage 13a und somit von 90° relativ zur zweiten Lage 13b. Die drei Lagen 13a bis 13c bilden ein dreidimensionales multiaxiales Gelege 3D-MAG13d.

Somit entsteht aus den auf dem ersten Werkstückträger 10 abgelegten Fasern bzw. Rovings ein Körper bzw. offener Profilkörper 14 in einer Primärform 15 aus einem Fadengelege. Da die Oberfläche des Werkstückträgers 10 rein konvex und eben ist, werden die unter Zuspannung stehenden Fäden auf der Oberfläche oder auf schon abgelegten anderen Fäden so abgelegt, dass zwischen den Fäden und dem ersten Werkstückträger 10 kein Hohlraum ausgebildet wird. Dies ermöglicht eine definierte und reproduzierbare Ausbildung des Körpers 14 mit der Primärform 15. Bevorzugt werden die Fasern durch Zusatzstoffe zusammengehalten. Der Körper 14 wird anschließend von dem ersten Werkstückträger 10 entfernt. Somit wird der Körper 14 in der Primärform 15, deren Oberfläche ausschließlich konvex ist, ausgebildet.

Es wird darauf hingewiesen, dass der Körper auch durch viele andere Verfahren hergestellt werden kann. Beispielsweise können die Fasern bzw. Rovings auch mittels eines Rahmens nach Art des Tiefziehens hergestellt werden. Des Weiteren können in dem Werkstückträger 10 auch konkave Bereiche vorhanden sein, die von dem Gelege überspannt werden.

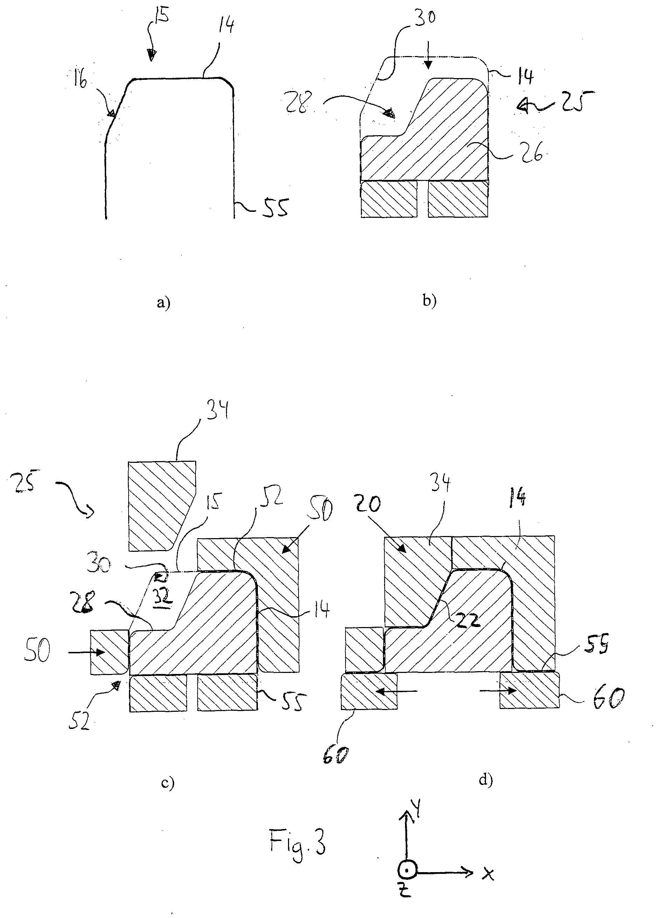

Figuren 3a) bis d) zeigen das Umformverfahren eines in einer Querschnittsansicht gezeigten Körpers 14 mit einer Primärform 15 in eine bzw. zu einer Sekundärform (Fertiggeometrie) 20, die einen umgeformten Bereich 22, der mindestens einen in Fig. 3 von oben betrachtet konkaven Abschnitt aufweist.

Zur Vereinfachung der weiteren Beschreibung ist in Figur 3a) ein Querschnitt eines Körpers 14 mit der Primärform 15 gezeigt, der nicht vollständig dem Querschnitt des in der Figur 2d) gezeigten Körpers 14 entspricht. Es wird ausdrücklich darauf hingewiesen, dass die weitere Beschreibung auch für ein Körper bzw. Bauteil 14, der wie in Figs. 1 bis 2d) beschrieben gefertigt wurde, gilt. Ein Werkstückträger 10 für den Körper 14 in der Primärform, wie er in Fig. 3a gezeigt ist, weist insbesondere eine Außenkontur auf, die der Innenkontur des Körpers 14 in Fig, 3a entspricht.

Der in Fig. 3a) gezeigte Körper 14 mit der Primärform wird, wie in Figuren 3b) bis 3d) gezeigt, in einer Nachformvorrichtung 25 in die Sekundärform 20 umgeformt. In diesem Beispiel weist die Nachformvorrichtung 25 ein Nachformunterwerkzeug (auch als Nachformpositivform, Werkstückträger, Werkstückhalter oder Nachformwerkzeug bezeichnet) 26 auf, auf das der Körper 14 in der Primärform 15 aufgesetzt bzw. aufgelegt wird. Das Nachformunterwerkzeug 26 weist eine ähnliche Form wie der erste Werkstückträger 10 auf. Bevorzugt weist es abschnittsweise dieselbe maximale Breite und Höhe wie der erste Werkstückträger 10 auf, so dass der Körper 14 definiert auf dem Nachformunterwerkzeug 26 zum Liegen kommen kann.

Das Nachformunterwerkzeug 26 unterscheidet sich von dem Werkstückträger 10 dadurch, dass es eine Oberfläche aufweist, die einen konkaven Bereich 28 aufweist.

Die in den Fig. 3b) bis 3c) gezeigten Querschnittsansichten zeigen immer dieselbe Querschnittsebene. Die Querschnittsebene ist bezüglich der nicht umgeformten Bereiche und/oder des Nachformunterwerkzeugs 26 bevorzugt ortsfest. D.h., die durch die Querschnittsebene geschnittenen Bereiche des Nachformunterwerkzeugs 26 und der nicht umgeformten Bereiche des Körpers sind bevorzugt identisch.

Nach dem Auflegen bzw. Aufschieben bzw. Aufsetzen des Körpers 14 auf das Nachformunterwerkzeug 26 wird, wie es in Fig. 3c) gezeigt ist, zwischen der konkaven Oberfläche 28 des Nachformunterwerkzeugs 26 und einer Innenoberfläche 30, das heißt der dem Nachformunterwerkzeug 26 zugewandten konkaven Oberfläche (bzw. Oberfläche die ausschließlich ebene und in einer in der in Fig. 3b gezeigten Querschnittsansicht positiv gekrümmte Abschnitte aufweist) des Körpers 14, von selbst ein Hohlraum 32 ausgebildet.

Der Körper 14 bzw. der umzuformende konvexe Bereich 16 (bzw. der umzuformende Bereich des Körpers, der ausschließlich ebene und in einer in der in Fig. 3a gezeigten Querschnittsansicht negativ gekrümmte Abschnitte aufweist) des Körpers, der nicht die Oberfläche des Nachformunterwerkzeugs 26 berührt, d.h., der konvexe Bereich 16 des Körper 14, der den Hohlraum 32 ausbildet, wird anschließend durch einen Stempel bzw. Nachformoberwerkzeug (auch als Nachformnegativform, Werkstückträger, Werkstückhalter oder Nachformwerkzeug bezeichnet) 34, das ebenfalls Teil der Nachformvorrichtung 25 ist, so umgeformt, dass die Innenoberfläche 30 des Körpers 14 an der konkaven Oberfläche 28 des Nachformunterwerkzeugs 26 anliegt. Die Umformung erfolgt im Wesentlichen ausschließlich durch Biegen des Körpers 14. D.h., der Körper 14 wird in diesem Beispiel beim Umformen im Wesentlichen nicht getaucht oder gestreckt. Eine Faser (oder ein Faserbereich), die (der) den konvexen Bereich 16 der Primärform 15 ausbildet, weist in diesem Beispiel dieselbe Länge auf, wie eine Faser (oder ein Faserbereich), die (der) den konkaven Bereich 22 des Körpers ausbildet. Der umzuformende konvexe Bereich 16 ist weist ausschließlich konvexe und ebene Bereiche und der umgeformte konkave Bereich weist ausschließlich konkave und ebene Bereiche auf.. Alternativ kann aus dem umzuformenden rein konvexen Bereich auch ein umgeformter Bereich erhalten werden, der konkave und konvexe oder konkave und konvexe und ebene Bereiche aufweist. Auch in diesem Fall erfolgt die Umformung ausschließlich durch Biegen. Aus dem in Fig. 3 gezeigten Querschnitt ist weiter ersichtlich, dass die Länge der Kontur der Schnittfläche des umzuformenden Bereichs 16 zwischen den nicht umzuformenden Bereichen 52 des Körpers 14 gleich der Länge der Kontur der Schnittfläche des umgeformten Bereichs 22 zwischen den nicht umzuformenden Bereichen 52 ist. Bei "dickeren" Körpern ist dies bei einer Linie, die im Querschnitt gesehen die Außen- oder Innenoberfläche begrenzt, oder eine Mittellinie, die sich durch den umzuformenden Bereich 16 zwischen den nicht umzuformenden Bereichen erstrecht ebenso der Fall.

Der Stempel 34 weist bevorzugt eine zu der konkaven Oberfläche bzw. dem konkaven Oberflächenbereich 28 des Nachformunterwerkzeugs 26 komplementäre Form (bevorzugt verkleinert um die Schichtdicke des Körpers 14) auf. D.h., der Stempel 34 weist, zumindest auf der dem Nachformunterwerkzeug 26 zugewandten Seite/Seiten im Wesentlichen die durch das Nachformunterwerkzeug 26 begrenzte Kontur des Hohlraums 32 auf.

Der konkave Bereich 28 des Nachformunterwerkzeugs 26 weist in diesem Beispiel den gleichen Flächeninhalt wie ein entsprechender konvexer Bereich der Oberfläche des ersten Werkstückträgers 10, bzw. ein entsprechender konvexer Bereich 16 des Körpers 14 auf. Bevorzugt entspricht die Größe der Oberfläche des ersten Werkstückträgers 10 wenigstens in Teilen der Größe der entsprechenden Oberfläche des Nachformunterwerkzeugs 26. Insbesondere ist die Größe der Flächenbereiche, durch die sich beide Werkstückträger voneinander unterscheiden und die zum Formen der Primär- und Sekundärform verwendet werden, gleich groß.

Das Nachformunterwerkzeug und das Nachformoberwerkzeug sind in diesem Beispiel jeweils bevorzugt als festes Formteil ausgebildet.

Durch den Umformvorgang wird die Sekundärform bzw. Fertiggeometrie 20 ausgebildet. Das heißt, ein konvexer Bereich 16 des Körpers 14 ist in einen konkaven Bereich 22 umgeformt (siehe Fig. 3d)).

Wie es aus Fig. 3c) ersichtlich ist, wird der Körper 14 vor dem Umformen mittels einer Festhalte- bzw. Fixiervorrichtung 50, die hier ebenfalls Teil der Nachformvorrichtung 25 ist, festgeklemmt. Ein Festhalte- bzw. Klemm- bzw. Fixierbereich 52 des Körpers 14 wird dabei in zwischen der Fixiervorrichtung 50 und dem Nachformunterwerkzeug 26 festgeklemmt. Die Fixiervorrichtung 50 ist in diesem Beispiel beispielsweise aus festen Formteilen hergestellt. Der Fixierbereich 52 wird beim Umformen des Körpers 14 bevorzugt nicht umgeformt und daher auch als nicht-umzuformender Bereich 52 bezeichnet. Bevorzugt wird der Körper 14 auf beiden bzw. allen Seiten des Hohlraums 32 bzw. des umzuformenden Bereichs 16 festgehalten. Dadurch wird sichergestellt, dass der Körper 14 bei dem Umformvorgang nicht auf dem Nachformunterwerkzeug 26 verrutschen kann.

Des Weiteren können, wie aus Fig. 2d) ersichtlich ist, die Endkanten 55 des offenen Profilkörpers 14 durch zusätzliche Umformwerkzeuge 60 beispielsweise zum weiteren Ausbilden von konkaven Bereichen umgeformt werden.

Der so ausgebildete Körper 14 mit der Sekundärform 20 entspricht dem fertig ausgeformten Fertiggeometrie-Vorformling, welcher anschließend weiterverarbeitet werden kann.

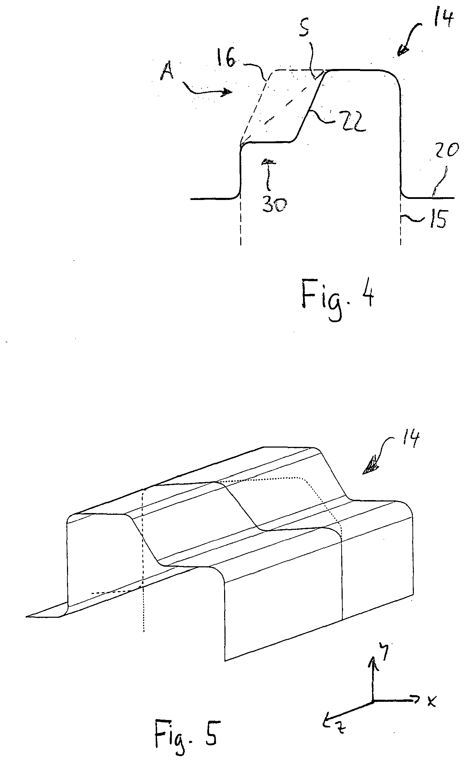

Fig. 4 zeigt eine seitliche Draufsicht (oder Querschnittsansicht) auf die Sekundärform 20 (durchgehende Linie) und die entsprechende Primärform 15 (gestrichelte Linie) gemäß dem ersten Beispiel. Fig. 5 zeigt eine entsprechende dreidimensionale Ansicht. Wie aus den Figuren gut ersichtlich ist, ist die Größe der Oberfläche des Körpers 14 in der Primärform 15 gleich der Größe der Oberfläche des Körpers 14 in der Sekundärform 20.

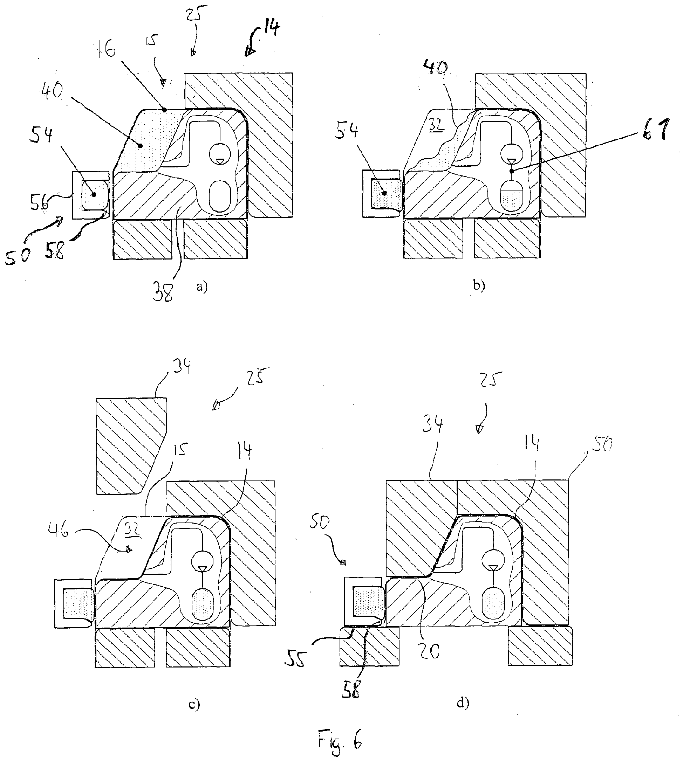

Fig. 6 zeigt Querschnittsansichten eines zweiten Beispiels. Dieselben Bauteile werden zur Vereinfachung in dieser und den weiteren Beispielen mit denselben Bezugszeichen bezeichnet und nicht nochmals beschrieben. Wie aus Fig. 6a) ersichtlich ist, ist in diesem Beispiel der Werkstückträger 10 integral mit der Nachformvorrichtung 25 bzw. dem Nachformwerkzeug oder Nachformunterwerkzeug 26 ausgebildet. D.h., es ist nur ein integraler Werkstückträger 38 vorgesehen, aus bzw. auf dem sowohl die Primärform 15 als auch die Sekundärform 20 geformt werden. Der integrale Werkstückträger 38 weist in diesem Beispiel einen flexiblen (bzw. variablen) Bereich 40 auf. Mittels des flexiblen Bereichs 40 kann die Außenkontur des Werkstückträgers 38 zum einen die Außenkontur des Werkstückträgers 10 gemäß dem ersten Beispiel und zum anderen die Außenkontur des Nachformunterwerkzeugs 26 gemäß dem ersten Beispiel annehmen. Wie weiter in Fig. 6a) dargestellt ist, weist der Werkstückträger 38 zum Ausbilden der konvexen Primärform 15 zuerst eine konvexe Form bzw. Oberfläche auf, auf der die Fasern abgelegt werden. Die Fasern werden also auf dem integralen Werkstückträger 38, bei dem der flexible Bereich 40 eine konvexe Form aufweist, abgelegt, so dass ein Körper 16 in einer Primärform 15 mit einer konvexen Oberfläche 16 entsprechend dem ersten Beispiel ausgebildet wird.

Alternativ kann die Primärform 15 wie in dem ersten Beispiel mittels eines separaten Werkstückträgers 10 ausgebildet werden. In diesem Fall wird die Primärform 15 anschließend auf den integralen Werkstückträger 38 gemäß dem zweiten Beispiel aufgelegt bzw. aufgesetzt.

In einem nächsten Schritt wird der Körper 14 wie auch in dem ersten Beispiel durch mindestens eine Festhaltevorrichtung bzw. Klemmvorrichtung oder Fixiervorrichtung 50 in einem Fixierbereich 52 festgehalten bzw. geklemmt, der nicht in einen konkaven Bereich umgeformt wird (siehe Fig. 5b)).

Anschließend wird der flexible Bereich 40 des Werkstückträgers 38 so umgeformt, dass er eine konkave Oberfläche 46 aufweist. Dadurch entsteht, wie auch bei dem ersten Beispiel, ein Hohlraum 32 zwischen dem Körper 14 und dem Werkstückträger 38 bzw. der konkaven Oberfläche 46 des Werkstückträgers 38. Zuletzt wird ein Nachformoberwerkzeug 34, wie es aus dem ersten Beispiel bekannt ist, an den Werkstückträger 38 zum Umformen des Körpers 14 in die Sekundärform 20 angelegt. Des Weiteren werden die unteren Kanten des Körpers 14 wie in dem ersten Beispiel umgebogen. Der flexible Bereich 40 muss bei seiner Umformung keine Dehnung oder Stauchung erfahren, da der Ursprungsflächeninhalt und der Zielflächeninhalt im Wesentlichen gleich sind.

In dem zweiten Beispiel ist die Fixiervorrichtung 50 in Form eines Klemmbalgs ausgebildet. Der Klemmbalg ist hier einen ausdehnbaren Körper in Form eines sich in der Längsrichtung z erstreckenden Schlauches 54. Der Schlauch 54 ist in ein sich in Längsrichtung z erstreckendes Profil 56, das einen U-förmigen Querschnitt senkrecht zu der Längsrichtung z aufweist, eingesetzt. Das Profil 56 ist in Richtung zu dem integralen Werkstückträger 38 hin geöffnet. Das Profil 56 ist ortsfest bezüglich des Werkstückträgers 38.

Durch Befüllen des Schlauchs 54 mit einem Fluid (z.B. Gas, Wasser oder Luft) wird der Schlauch(-körper) ausgedehnt. Da der Schlauch von drei Seiten von dem halb geöffneten Profil 56 umgeben ist, kann er sich nur in Richtung zu dem Werkstückträger 38 hin ausdehnen (siehe Fig. 5b)). Durch die Ausdehnung wird der Körper 14, der sich auf der Oberfläche des Werkstückträgers 38 erstreckt, zwischen dem sich ausdehnenden bzw. ausgedehnten Schlauch 54 und dem Werkstückträger 38 eingeklemmt. Wie oben beschrieben, kann durch die Verwendung eines solchen Schlauches sichergestellt werden, dass jede einzelne Faser mit im Wesentlichen der gleichen Kraft festgehalten wird.

Das U-förmige Profil 56 weist definitionsgemäß zwei sich parallel erstreckende Wände auf. Bevorzugt ist die Form jeder Wand daran angepasst, wie der Schlauch sich ausbreiten soll. In dem vorliegenden Beispiel weist eine dem umzuformenden konvexen Bereich des Körpers 14 abgewandte Wand 58 des Profils 56 eine Abschrägung auf, so dass der Schlauch 54 sich in dem Bereich der Kante 58 besser bis in die Ecke, die beim Umformen der Endkanten 55 entsteht, ausdehnen kann (siehe Fig. 6d)).

Der Schlauch 54 ist mit einer Vorrichtung zum Befüllen bzw. Entleeren verbunden (nicht gezeigt).

Der flexible Bereich 40 des integralen Werkstückträgers 38 wird bevorzugt durch einen ausdehnbaren Körper in Form eines Balgs ausgebildet. Der Balg ist mit einer Vorrichtung 61 (siehe Fig. 6b)) zum Befüllen und Entleeren des Balgs verbunden. Die Vorrichtung 60 ist bevorzugt durch eine Pumpe, einen Tank und entsprechende Ventile ausgebildet. Der Balg ist so ausgebildet, dass er, zumindest wenn er befüllt ist, eine definierte Form annimmt. Wenn er entleert wird, bestimmt sich seine Form im Wesentlichen durch die Oberfläche, auf die er aufgebracht ist.

Der integrale Werkstückträger 38 wird beispielsweise ausgebildet indem ein Basis-Werkstückträger, dessen Form der Form des zweiten Werkstückträgers 26 gemäß dem ersten Beispiel entspricht, mit einem solchen flexiblen Bereich 40 versehen wird. Der flexible Bereich 40 wird auf dem konkaven Oberflächenbereich 28 des Basis-Werkstückträgers aufgebracht. Der flexible Bereich 40 ist weiter so ausgebildet, dass er nach dem Befüllen mit Fluid den Basis-Werkstückträger bzw. dessen Form so ergänzt, dass der Basis-Werkstückträger und der befüllte flexible Bereich 40 zusammen die Form bzw. Außenkontur des ersten Werkstückträgers 10 ausbilden.

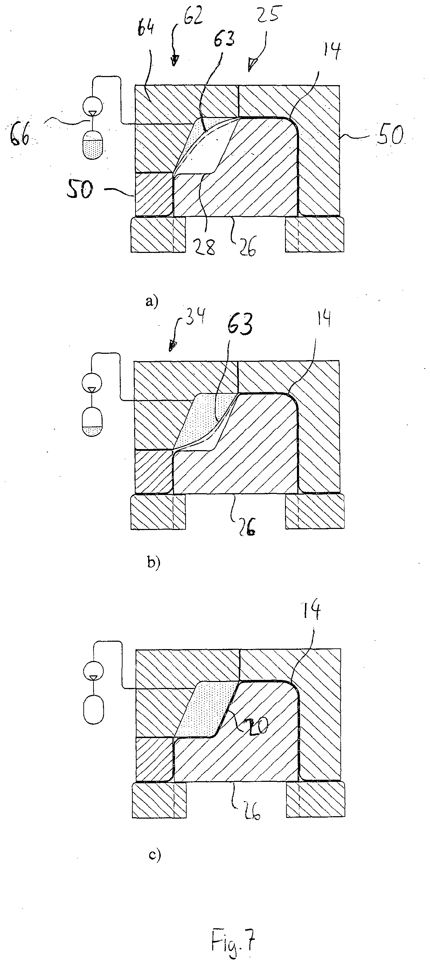

Fig. 7a) bis c) zeigen Querschnittsansichten einem dritten Beispiel. Die Querschnittsanschichten zeigen immer dieselbe Querschnittsebene von nicht umzuformenden Bereichen des Körpers und/oder dieselbe Ebene Querschnittsebene des Nachformwerkzeugs.

In diesem Beispiel ist der Körper 14 mit der Primärform 15 bereits ausgebildet, auf ein Nachformunterwerkzeug 26 aufgesetzt und mit einer Festhaltevorrichtung 50 aus zwei Klemmbacken gemäß dem ersten Beispiel festgehalten bzw. befestigt. Das dritte Beispiel unterscheidet sich insbesondere dadurch von dem ersten Beispiel, dass das Nachformoberwerkzeug 34 der Nachformvorrichtung 25 in diesem Beispiel nicht aus einem Stempel, wie er in dem ersten Beispiel gezeigt ist, sondern aus einem Oberwerkzeug 62, das einen flexiblen (variabel verformbarer) Bereich 63 aufweist, ausgebildet ist. Das Oberwerkzeug 62 ist aus einem Basiskörper 64 und dem flexiblen Bereich 63 in Form eines Balgs ausgebildet. Der Basiskörper 64 ist so ausgebildet, dass mindestens ein Bereich seiner Innenkontur im Wesentlichen der Außenkontur des umzuformenden konvexen Bereichs 16 der Primärform 15 entspricht. Der flexible Bereich 63 ist auf den oben genannten Bereich der Innenkontur des Basiskörpers 64 aufgebracht. Der Balg kann ähnlich wie der flexible Bereich 40 des integralen Werkstückträgers 38 gemäß dem zweiten Beispiel durch eine Befüllvorrichtung 66 befüllt und entleert werden. Die Befüllvorrichtung 66 ist bevorzugt durch eine Pumpe und einen Tank ausgebildet.

Wenn der flexible Bereich 63 entleert ist, kann das Nachformoberwerkzeug 62 gemäß diesem Beispiel auf das Nachformunterwerkzeug 26 bzw. die Klemmbacken 50 aufgesetzt werden und den Körper 14 in der Primärform 15 umschließen, ohne diesen zu verformen.

Anschließend wird, wie in Fig. 7b) gezeigt, der flexible Bereich 63 mit Fluid befüllt, so dass er sich ausdehnt und den Körper 14 bzw. dessen umzuformenden konvexen Bereich 16 umformt. Die Umformung erfolgt hier beim Befüllen des mit Fluid gefüllten Balgs gleichmäßig in Richtung auf den konkaven Bereich 28 der Oberfläche des Nachformunterwerkzeugs 26, bis der konvexe Bereich 16 des Körpers 14 vollständig in die der konkaven Kontur 28 des Nachformunterwerkzeugs 26 entsprechende konkave Sekundärform 20 umgeformt ist (siehe Fig. 7c).

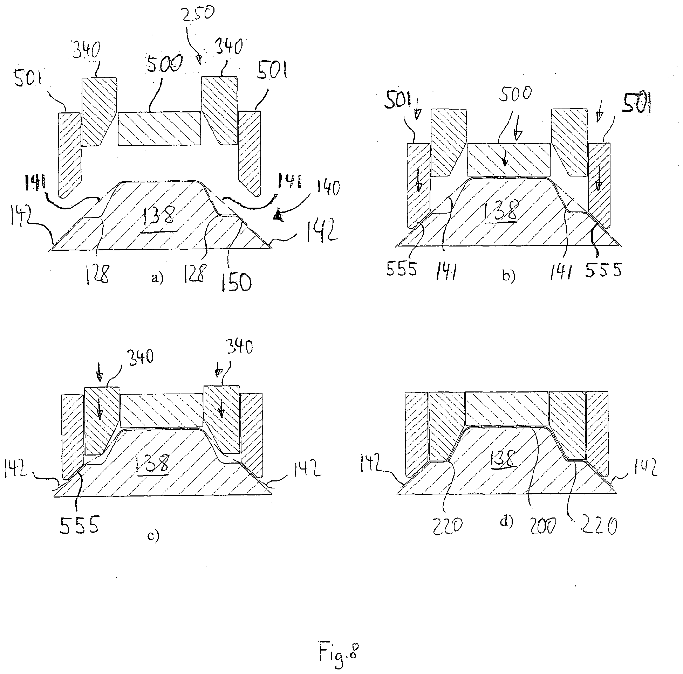

Fig. 8a) bis d) zeigen Querschnittansichten von Umformschritten eines weiteren Körpers 140 in einer Primärform 150 in eine Sekundärform 200 gemäß einer ersten Ausführungsform. Die Querschnittsanschichten zeigen immer dieselbe Querschnittsebene von nicht umzuformenden Bereichen des Körpers und/oder dieselbe Ebene Querschnittsebene des Nachformwerkzeugs. In dieser Ausführungsform werden, wie in der vorangegangenen Beispielen, die Primärform 150 und die Sekundärform 200 durch einen einzigen integralen Werkstückträger 138, der gleichzeitig das Nachformunterwerkzeug der Nachformvorrichtung 250 ausbildet, ausgebildet. Der Werkstückträger 138 weist zwei konkave Oberflächenbereiche (Bereiche mit ausschließlich konkaven oder ausschließlich konkaven und ebenen Bereichen) 128 auf. Die unter Zugspannung auf dem Werkstückträger 138 abgelegten Fasern überspannen beim Ausbilden des Körpers 140 in der Primärform 150 diese konkaven Bereiche 128. Die Bereiche, die die konkaven Bereiche 128 überspannen, werden als Überspannbereiche bzw. umzuformende Bereiche 141 bezeichnet und sind in dieser Ausführungsform im Wesentlichen eben (ebene Bereiche). Der so ausgebildete Körper 140 mit der Primärform 150 weist daher, wie auch in dem ersten bis dritten Beispiel, zumindest abschnittsweise keine konkaven Bereiche auf.

In einem nächsten Schritt wird der Körper 140 in der Primärform 150 durch eine Fixiervorrichtung auf dem Werkstückträger 138 fixiert. Insbesondere werden nicht umzuformende Bereiche des Körpers 140 insbesondere nahe dem umzuformenden Bereich bzw. um diesen herum fixiert. Weiter ist es bevorzugt, wenn beispielsweise zuerst Bereiche im Zentrum des Körpers 140 bzw. Bauteilbereichs fixiert werden und anschließend Randbereiche fixiert werden. In der vorliegenden Ausführungsform wird der Körper 140 in der Primärform 150 daher zuerst durch eine zentrale Fixiervorrichtung 500 fixiert. Anschließend werden die Endkanten 555 des Körpers 14 durch zwei weitere seitliche Randfixiervorrichtungen (auch als Fixiervorrichtungen bezeichnet) 501 fixiert. Mit anderen Worten: Bereiche des Körpers 14, die an die Überspannbereiche 141 angrenzen, werden bevorzugt vor dem Umformen fixiert.

In den in Fig. 8c) und d) dargestellten weiteren Schritten werden die Überspannbereiche 141 (umzuformende Bereiche) des Körpers 140 mittels eines Nachformoberwerkzeugs 340 so umgeformt, dass sie die Form der konkaven Bereiche 128 annehmen. Der Körper 140 weist anschließend die Sekundärform 200 auf. Das Nachformoberwerkzeug 340 ist hier durch zwei Stempel ausgebildet, die eine zu den konkaven Bereichen 128 des Werkstückträgers 138 komplementäre Form aufweisen. Das heißt, durch das Einfahren der Stempel 340 werden die ebenen Überspannbereiche 141 des Körpers 140 so eingedrückt, dass sie die Form der konkaven Bereiche 128 des Werkstückträgers 138 annehmen. Durch die Umformung werden in an dem konkaven Bereich 128 umgeformte Bereiche 220 mit mindestens einem konkaven Abschnitt ausgebildet. Da in dieser Ausführungsform aus den ebenen Überspannbereichen 141 zwischen zwei Kanten des Werkstückträgers 138 der insgesamt konkave Bereich 220, der sich zwischen denselben Kanten erstreckt, ausgebildet wird, weist der konkave Bereich 220 (umgeformter Bereich) zwangsweise einen größeren Flächeninhalt als der entsprechende ebene Bereich 141 auf. Da die das Gelege bzw. den Körper 14 ausbildenden Fasern hier bevorzugt nicht dehnbar sind, werden zum Vergrößern des Flächeninhalts Fasern aus einem äußersten Randbereich 142 des Körpers 140 nachgezogen. Die Fixierung durch die Randfixiervorrichtungen 501 ist daher bevorzugt nur so stark, dass ein Nachrutschen der Fasern ermöglicht wird. Der Randbereich 142 bzw. die Länge der Fasern im Randbereich ist beim Ausbilden des Körpers 140 so bemessen, dass der für die Sekundärform gewünschte Rand ohne Einschnürungen der Sekundärform 220 erreicht werden kann.

Mit anderen Worten: um das Umformen des ebenen (umzuformenden) Bereichs in den konkaven (umgeformten) Bereich zu ermöglichen muss die Fläche des ebenen Bereichs "gestreckt" oder "gedehnt" werden. Da eine plastische Dehnung von den genannten Fasern nicht möglich ist, müssen Fasern, die in der Richtung der Vergrößerung bzw. Dehnung verlaufen, nachgezogen werden. Bei Fasern, die senkrecht dazu verlaufen, kann nur der Abstand zu der jeweils benachbarten Faser erhöht werden, d.h., die Faserdichte wird verringert werden. Bei Fasern die schräg verlaufen ergibt sich die jeweilige Komponente anteilig.

Die Randfixiervorrichtungen 501 sind bevorzugt als ein Klemmbalg, wie er oben beschrieben wurde, ausgebildet. Mit einem solchen Klemmbalg ist es möglich ein Rutschen der Fasern, die nachgezogen werden müssen, zu ermöglichen und gleichzeitig dafür zu sorgen, dass benachbarte Fasern, die nicht nachgezogen werden dürfen nicht verrutschen.

Alternativ kann in der in Fig. 8a) bis d) gezeigten Ausführungsform der Umformprozess jeweils nach dem Ablegen einer Einzellage zum Ausbilden des Körpers 140 in der Primärform 150 erfolgen. D.h., es wird jeweils eine Lage Fasern (bevorzugt unidirektional) abgelegt, fixiert und anschließend in die Sekundärform umgeformt. Nach dem Umformen werden die Fixiervorrichtung 500, 501 und die Umformstempel 340 entfernt und eine weitere Einzellage von Fasern aufgebracht, die anschließend nach dem Fixieren wieder umgeformt wird.

Somit wird ermöglicht, die Umformung in die Sekundärform nach jeder Einzellage durchzuführen.

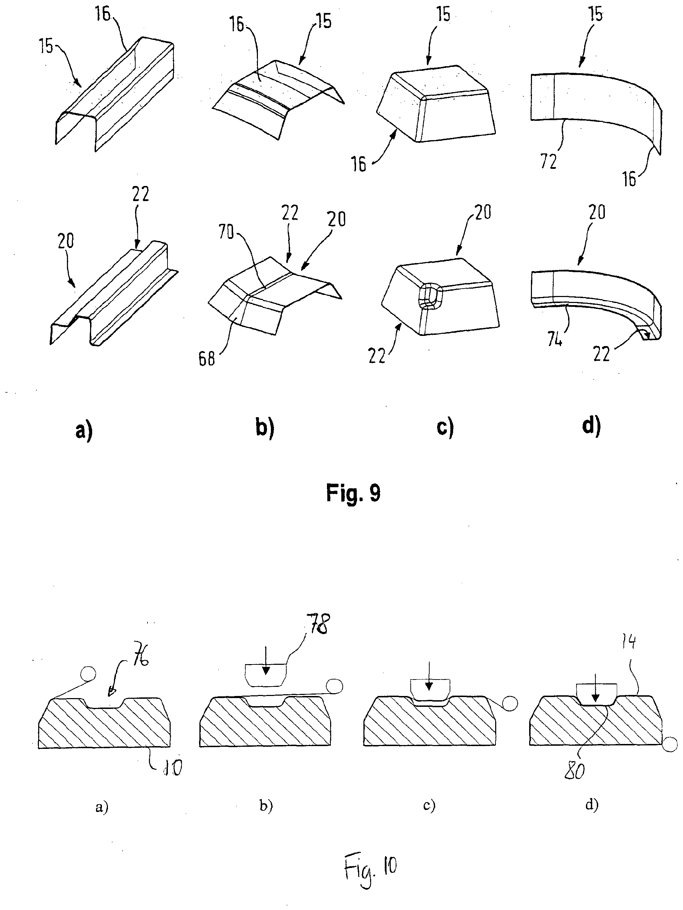

Fig. 9a) bis d) zeigen weitere Sekundärformen 20, die durch eine der oben genannten Vorrichtungen aus ihren entsprechenden Primärformen 14 ausgebildet wurden.

Fig. 9a) zeigt einen Körper 14, der im Wesentlichen dem des ersten bis dritten Beispiels entspricht. Bei diesen Körpern 14 entspricht die Oberfläche des konkaven Bereichs 22 der Sekundärform 20 im Wesentlichen der Oberfläche des konvexen Bereichs 16 der Primärform 15.

Dasselbe gilt für den in Fig. 9c) gezeigten Körper. Bei diesem werden beim Umformvorgang Fasern zusammengestaucht bzw. zusammengeschoben.

Bei dem in Fig. 9b) gezeigten Beispiel ist die Oberfläche der konkaven Sekundärform 20 größer als die der konvexen Primärform 15, da ein abgewinkelter (V-förmiger) Randbereich 68 beim Umformen des Körpers 14 in die Sekundärform 20 aufgeweitet werden muss, um eine Faltenbildung in einem zentralen Bereich 70 zu verhindern. Eine solche Aufweitung wird ermöglicht, indem Fasern aus einem oder mehreren Randbereichen des Körpers 14 nachgezogen werden. Wie eingangs erwähnt, wird hierfür beispielsweise beim Ablegen der Fasern zum Ausbilden des Körpers 14 in der Primärform 15 eine entsprechende Reserve vorgesehen. Alternativ können die Fasern auch beim Umformen in die Sekundärform 22 beispielsweise durch Faservorratsrollen vorgehalten werden und erst nach dem Umformprozess abgetrennt werden. Alternativ kann schon beim oder nach dem Ablegen jeder Fasenschar eine Umformung erfolgen. Die Festhaltevorrichtung 50 darf die Fasern in dieser Ausführungsform nur so fest halten, dass ein Nachrutschen einzelner Fasern ermöglicht wird.

Auch bei dem in Fig. 9d) gezeigten Beispiel ist es erforderlich, dass die Fasern in dem Fasergelege des Körpers 14 sich beim Umformen in die Sekundärform 20 innerhalb des Körpers verschieben. Die untere Kante 72 des Körpers 14 weist in der Primärform 15 eine größere Länge als die untere Kante 74 in der Sekundärform 20 auf. Da die Fasern in ihrer Längsrichtung nicht stauch- oder dehnbar sind, ist es in diesem Beispiel bevorzugt, dass keine der Fasern parallel zu der unteren Kante 72 des Körpers 14 in der Primärform 15 gelegt wird. Beim Umformen dieser Primärform 15 in die Sekundärform 20 schieben sich die senkrecht oder schräg zu der unteren Kante verlaufenden Fasern bevorzugt zusammen, so dass Faltenbildung verhindert wird. Die unter 30-90° die Kante 72 kreuzenden Fasern rutschen dabei zusammen, so dass sich deren Abstand zueinander verringert. Die die lokale Fasermenge und damit die Wanddicke des zu bildenden Bauteils erhöht sich daher.

Fig. 10a) bis d) zeigen eine weitere Variante des Formgebungsprozesses für die Primärform 15 des Körpers 14. In dieser Variante werden bereits beim Ausbilden des Körpers 14 ein oder mehrere konkave Zonen beim Legen einer einzelnen Faser oder Faserschar auf den Werkstückträger 10 ausgebildet. Dazu werden in diesem Beispiel die Fasern bzw. Faserschar zunächst an einem Ende am Werkstückträger 10 fixiert und über eine auf der Oberfläche des Werkstückträgers 26 ausgebildete konkave Zone 76 gespannt. Ein abzüglich der Faserdicke bevorzugt genau in die konkavem Zonen 76 passender Stempel 78 drückt die die konkave Zone 76 überspannenden Fasern in die konkave Zone 76 so ein, dass die Fasern auf der Oberfläche der konkaven Zone zum liegen kommen. Die zum Abdecken bzw. Aufliegen auf der konkaven Zone zusätzlich benötigte Faserlänge wird dabei noch aus dem Ablegewerkzeug (beispielsweise Faserrolle) nachgezogen. Der Stempel verbleibt so lange in dieser Position, bis die Fasern ausreichend am Werkstückträger 26, beispielsweise mittels eines Stoffschluss, fixiert sind. Frühestens nach dem Einfahren des Stempels kann auch das andere Ende der Fasern fixiert werden. Alternativ oder zusätzlich können die Fasern in der konkaven Zone 76 durch Unterdruck oder direkten Stoffschluss so gehalten werden, dass der Stempel 78 sofort wieder entfernt werden kann. Mit diesem Verfahren wird ein Körper 14 in der Primärform ausgebildet, der bereits einen konkaven Bereich 80 aufweist.

Alternativ oder zusätzlich kann der Stempel 78 auch aus einem flexiblen verformbaren Material ausgebildet sein. Beispielsweise kann ein Balg oder ein elastisches Material, wie es oben beschrieben wurde, verwendet werden, welcher bzw. welches sich genau der konkaven Zone anpasst. Somit werden die Fäden auch bei speziellen Formen in allen Bereichen der konkaven Zone 76 auf den Werkstückträger 26 aufgelegt.

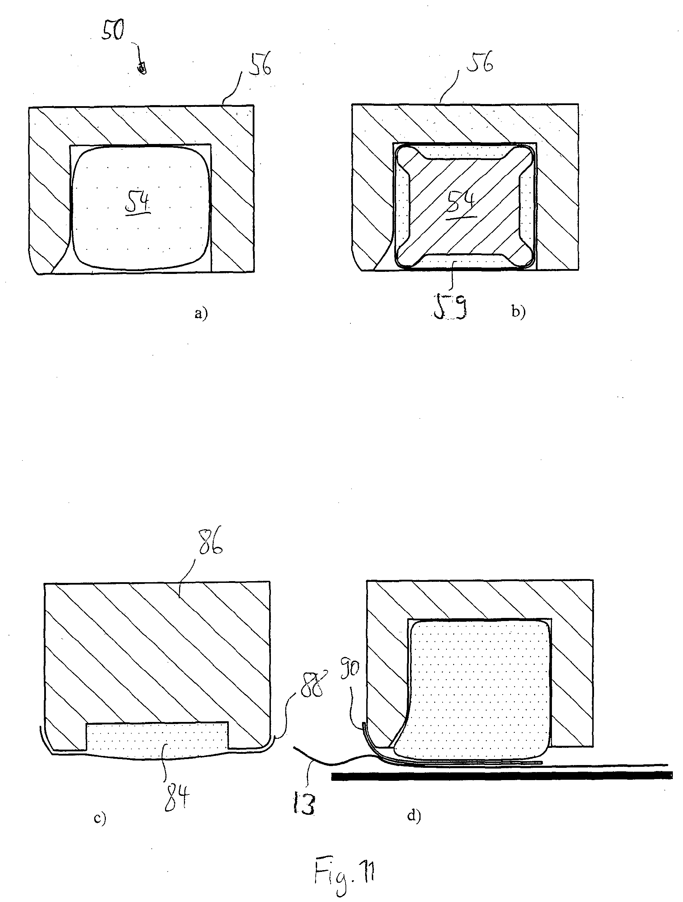

Fig. 11a) bis d) zeigen Varianten der Fixiervorrichtung 50 in Form eines Klemmbalgs.

Fig. 11a) zeigt den Klemmbalg gemäß dem oben beschriebenen zweiten Beispiel, bei der ein Druckschlauch 54 bevorzugt einen rechteckigen Querschnitt aufweist und ein U-förmiges Profil 56 einseitig so abgeschrägt ist, dass der Druckschlauch sich beim Ausdehnen auf einer Seite mehr in eine Richtung parallel zu dem Boden des U-förmigen Profils 56 ausdehnt.

Fig. 11b) zeigt einen Klemmbalg aus einem Schlauch 54 beliebigen Querschnitts, der durch einen Einsatz 59 in die rechteckige Form des Profils 56 gezogen wird.

Fig. 11c) zeigt einen Klemmbalg, der aus einer Membran 84 ausgebildet ist, welche durch das Überspannen eines Formteils 86 mit einer Randbefestigung 88 entsteht.

Fig. 11d) zeigt einen Klemmbalg gemäß dem oben beschriebenen zweiten Beispiel, bei dem eine zusätzliche Abdeckung 90 zum Schutz des Schlauchs 54 vor Mitziehen mit den unter der Klemmung rutschenden Fasern ausgebildet ist.

Selbstverständlich können die oben angegebenen Ausführungsformen/Beispiele bzw. einzelnen Merkmale der Ausführungsformen/Beispiele miteinander kombiniert werden. Insbesondere können alle beschriebenen Formen von Klemmvorrichtungen, Nachformvorrichtungen und Werkstückträgern miteinander kombiniert werden.

Beispielsweise kann der Werkstückträger mit flexiblem Bereich nur als Nachformwerkstückträger eingesetzt werden oder alternativ als Werkstückträger und Nachformunterwerkzeug eingesetzt werden. Der Klemmbalg kann in verschiedenen Ausführungsformen auch beidseitig des umzuformenden Bereichs zum Festhalten des Körpers auf einem Werkstückträger eingesetzt werden. Das heißt, es können auch mehrere Klemmbälge vorgesehen werden. Der Klemmbalg kann unterschiedlichste Formen aufweisen, solange er dazu geeignet ist, die Fasern des Körpers zu klemmen. Des Weiteren können auch mehrere konkave Bereiche gleichzeitig oder nacheinander, auch an verschiedenen Positionen der Primärform ausgebildet werden. Die Sekundärform kann also in mehreren Stufen ausgebildet werden, bzw. es können mehrere Stufen der Sekundärform ausgebildet werden.

Alternativ oder zusätzlich zu der Klemmvorrichtung in Form eines Klemmbalgs oder eines Klemmprofils kann der Körper am Werkstückträger, wie oben beschrieben, auch durch Unterdruck fixiert werden. Insbesondere kann der Werkstückträger ganz oder teilweise aus einer feinstporigen Sintermetalloberfläche ausgebildet sein, deren Poren, das heißt Durchlässe, von einer dem Körper abgewandten Seite der Sintermetalloberfläche mit Unterdruck versorgt werden. Dadurch kann erreicht werden, dass jeder einzelne Faden durch Unterdruck an der Oberfläche des Werkstückträgers festgehalten werden kann.

Der Körper 14 mit der Primärform kann auch durch loses Ablegen von Fasern in einem konkaven Werkstückträger ausgebildet werden. Das Nachformoberwerkzeug und das Nachformunterwerkzeug können auch jeweils über Kopf angeordnet sein. D.h., die Funktion des oben beschriebenen Nachformunterwerkzeugs kann auch durch ein Nachformoberwerkzeug realisiert werden. Falls das Nachformoberwerkzeug den Körper halten muss, damit er nicht von demselben abfällt, kann eine geeignete Haltevorrichtung vorgesehen sein (beispielsweise Unterdruckversorgung).

Bei einer reinen Biegung des Körpers in die Sekundärform (Umformen ohne Nachrutschen) dient das Festhalten bzw. Fixieren des Körpers an dem Nachformunterwerkzeug insbesondere dazu, dass die Biegung der Fasern nicht bewirken kann, dass an den Biegebereichen angrenzende Faserbereiche aufgrund der Biegesteifigkeit der Fasern von dem Nachformunterwerkzeug abgehoben werden. In einem solchen Fall wäre die Sekundärform nicht mehr eindeutig definiert.

Im Falle des Umformens mit Nachrutschen von Fasern kann der Körper in der Primärform mit Reservebereichen am Rand ausgebildet werden. Die Fasern die nachgezogen werden, werden dann aus diesem Rand nachgezogen, ohne dass die Sekundärform davon beeinträchtigt wird. D.h., die Reservebereiche sind so dimensioniert, dass nach dem Umformen in jedem Fall die gewünschte Sekundärform realisiert werden kann und am Rand der Sekundärform keine Fasern "fehlen". Alternativ kann die Primärform ausgebildet werden, wobei die Fasern, mit denen die Primärform ausgebildet wird, noch bis zum Ende des Umformvorgangs in die Sekundärform mit dem Körper in der Primärform verbunden bleiben. D.h., Fasern, die von Rollen abgewickelt und zum Ausbilden der Primärform verwendet werden, werden nach dem Fertigstellen des Körpers mit der Primärform nicht von diesem getrennt. Anschließend wird der Körper umgeformt und die Fasern können nachrutschen. Eine Trennung der Fasern (Abschneiden) erfolgt nach dem Umformen des Körpers.

Das Festhalten von einzelnen Fadenelementen, Rovings oder Filamenten auf einer mit Unterdruck versorgten Sintermetalloberfläche kann auch bei anderen Anwendungen eingesetzt werden. Dies kann auch allein für sich beansprucht werden.

Das Festhalten von Fadenelementen, Rovings oder Filamenten durch einen Klemmbalg kann auch bei anderen Anwendungen eingesetzt werden. Dies kann daher auch allein für sich beansprucht werden.

Das Ausbilden eines Körpers 10 in der Primärform mit einem konkaven Bereich, wie es mit Bezug auf Fig. 10 oben beschrieben wurde, kann auch bei anderen Anwendungen eingesetzt werden. Dies kann daher auch allein für sich beansprucht werden.
Die Dichte der Fasern in dem mindestens einen konvexen Bereich (16) vor der Verformung kann so gewählt werden, dass die Dichte der Fasern in einem Bereich (14), der nicht verformt wird, im Wesentlichen der Dichte der Fasern in dem mindestens einen konkaven Bereich (22) nach dem Verformen entspricht.

Alternativ oder zusätzlich kann beim Ablegen der Fasern in dem konvexen Bereich eine geringere Faserdichte als in dem übrigen Körper vorgesehen werden. Beim Verformen des konvexen Bereichs in den konkaven Bereich können die Fasern zusammengeschoben werden, so dass der Körper nach dem Verformen überall im Wesentlichen die gleiche Faserdichte aufweist.

Die gemäß der ersten Ausführungsform als "eben" beschriebenen Überspannbereiche 141 können in Abhängigkeit von der Ablegereihenfolge in einzelnen Richtungen, , der Faserrichtung und der geometrischen Ausgestaltung der Außenkontur der konkaven Außenkontur des Werkstückträgers, insbesondere deren Randbereich, auch eine mindestens teilweise konkave Form bzw. konkave Bereiche aufweisen.

Ein beispielhaftes Verfahren zum Herstellen von dreidimensionalen Fasergelegen kann außerdem durch Merkmale der folgenden Aspekte charakterisiert werden:
Gemäß einem ersten Aspekt wird ein Verfahren zum Herstellen von dreidimensionalen Fasergelegen und Bauteilvorformlingen aus Fasern, mit folgenden Schritten angegeben: Umformen mindestens eines insgesamt konvexen Bereichs (16) eines Körpers (14) aus einem Gelege von Fasern zu mindestens einem umgeformten Bereich (22), der aus derselben Blickrichtung betrachtet mindestens teilweise eine konkave Form aufweist, wobei der Flächeninhalt des umgeformten Bereichs (22) dem Flächeninhalt des mindestens einen konvexen Bereichs (16) entspricht und/oder mindestens der Abschnitt einer Faser (13), der den konvexen Bereich (16) des Körpers (14) ausbildet, derselbe Abschnitt der Faser (13) ist, der den umgeformten Bereich (22) des Körpers (14) ausbildet.

Der erste Aspekt kann dadurch weiter charakterisiert werden, dass der umgeformte Bereich (22), betrachtet in der derselben Querschnittsansicht des Körpers (14), zwischen zwei nicht umgeformten Bereichen (52) des Körpers (14) angeordnet ist.

Gemäß einem dritten Aspekt wird ein Verfahren zum Umformen eines umzuformenden Bereichs (16) eines Fasergelegekörpers (14) angegeben, bei dem der umzuformende Bereich (16) in einer Schnittansicht des Körpers (14), wie sie beispielsweise in Fig. 3 gezeigt ist, an sich gegenüberliegenden Endbereichen des umzuformenden Bereichs (16) in in dem Umformprozess nicht zu verformende Bereiche (Fixierbereiche 52) des Körpers (14) übergeht und die Verformung derart ist, dass sich beim Umformen in der Querschnittsansicht zumindest ein Bereich oder Abschnitt des umzuformenden Bereichs (16) auf eine in der Querschnittsansicht zwischen den gegenüberliegenden Endbereichen verlaufende Gerade S (siehe Fig. 4) zu bewegt, wobei die Größe der Faserstücke bzw. Oberfläche des umzuformenden Bereichs vor und nach der Verformung gleich ist.

Gemäß einem vierten Aspekt wird ein Verfahren zum Verformen eines umzuformenden Bereichs (16) eines flächigen, dreidimensionalen Fadengelegekörpers (14) mit einer Außenseite A (siehe Fig. 4) und einer Innenseite (30) angegeben, welcher umzuformende Bereich (16) vor seiner Verformung von der Außenseite (in Fig. 3 von oben) des Fadengelegekörpers gesehen eine insgesamt konvexe Gestalt hat, bei welchem Verfahren zumindest ein Teil des umzuformenden Bereichs bei dessen Verformung in Richtung von der Außenseite zur Innenseite relativ zu dem Fadengelegekörper bewegt wird, wobei die Größe der Oberfläche des umzuformenden Bereichs und die Abschnitte der den umzuformenden Bereich bildenden Fäden vor und nach der Verformung gleich sind, und wobei der umzuformende Bereich über einen ihn zumindest teilweise umschließenden Randbereich in den übrigen Fadengelegekörpers übergeht und der Randbereich sowie die ihn bildenden Fadensegmente sich bei der Verformung nicht ändern.

Gemäß einem fünften Aspekt kann die Gestalt der vor der Verformung konkaven Innenseite des umzuformenden Bereichs der Gestalt der nach der Verformung konkaven Außenseite des umgeformten Bereichs entsprechen.

## Patentansprüche

1. Verfahren zum Herstellen von dreidimensionalen Fasergelegen und Bauteilvorformlingen aus Fasern, mit folgenden Schritten:
Ausbilden eines insgesamt konvexen Körpers (140) aus einem Fasergelege durch Ablegen von Fasern auf einer Oberfläche eines Werkstückträgers (138) einer Nachformvorrichtung (250), nach dem Ausbilden des insgesamt konvexen Körpers (140) aus dem Fasergelege, Klemmen mindestens zweier Randbereiche (555) des insgesamt konvexen Körpers (140) aus dem Fasergelege auf der Oberfläche des Werkstückträgers durch Klemmen jedes Randbereichs (555) zwischen einer Klemmvorrichtung (501) und dem Werkstückträger (138),
Umformen eines zwischen den Randbereichen (555) liegenden umzuformenden Bereichs (141) des insgesamt konvexen Körpers (140) aus dem Fasergelege zu einem umgeformten Bereich (220) mit mindestens einem konkaven Abschnitt durch die Nachformvorrichtung (250), wobei der Flächeninhalt des umgeformten Bereichs (220) größer als der Flächeninhalt des umzuformenden Bereichs (141) ist und/oder mindestens der Abschnitt einer Faser (13), der den umgeformten Bereich (220) des Körpers (140) ausbildet, eine Länge aufweist, die größer der Länge des Abschnitts derselben Faser ist, der den umzuformenden Bereich (141) des Körpers (140) ausbildet und/oder der Verlauf einer Oberfläche des umzuformenden Bereichs (141) in einer Querschnittsansicht durch eine erste Linie und der Verlauf derselben Oberfläche des umgeformten Bereichs (220) in der Querschnittsansicht durch eine zweite Linie dargestellt wird und die erste Linie kürzer als die zweite Linie ist,
das Klemmen vor dem Umformen erfolgt, und
beim Umformen einzelne Fasern (13) des Fasergeleges, die durch den umgeformten Bereich (220) verlaufen, in ihrer Längsrichtung zum Vermeiden oder Verringern von Faltenbildung verschoben werden oder aus einem Randbereich des Körpers (140) nachrutschen.

2. Verfahren nach Anspruch 1, bei dem
das Klemmen durch einen mit Fluid befüllbaren und dadurch ausdehnbaren Balg oder Schlauch (54) erfolgt, so dass einzelne Fasern (13) zwischen der Klemmvorrichtung (501) und der Nachformvorrichtung (250) nachgezogen werden können.

3. Verfahren nach Anspruch 2, bei dem
der Werkstückträger (138) in der Oberfläche, auf der die Fasern abgelegt werden, eine konkave Zone (128) aufweist,
die Fasern die konkave Zone (128) beim Ablegen der Fasern auf der Oberfläche des Werkstückträgers (138) in einem Ablegezyklus überspannen, wobei
die Fasern in dem Umformschritt durch einen an die konkave Zone (128) angepassten Stempel (340) auf die Oberfläche der konkaven Zone (128) gedrückt werden und mit der Oberfläche der konkaven Zone (128) verbunden werden, der Stempel (340) anschließend wieder entfernt wird und somit ein insgesamt konvexer Körper (142) mit einem konkaven Bereich (220) ausgebildet wird.

4. Verfahren nach Anspruch 1 oder 2, bei dem
das Umformen durch einen flexiblen Bereich (63) erfolgt, der zwischen einer zu dem umzuformenden Bereich (141) des Körpers (140) komplementären Form und einer zu dem umgeformten Bereich (220) komplementären Form verformt werden kann.

5. Vorrichtung zum Herstellen von dreidimensionalen Fasergelegen und Bauteilvorformlingen aus Fasern, mit
einem Roboter (1), an dem ein Legekopf (2) zum Ablegen von Fasern auf einem Werkstückträger (138) einer Nachformvorrichtung (250) zum Ausbilden eines insgesamt in Ablegerichtung betrachtet konvexen Körpers (140) mit mindestens einem umzuformenden konvexen oder konvexen und ebenen Bereich (141) befestigt ist,
der Nachformvorrichtung (250), die zum Umformen des mindestens des umzuformenden Bereichs (141) in einen umgeformten Bereich (220) mit mindestens einem konkaven Abschnitt geeignet ist,
einer Klemmvorrichtung (501) die angepasst ist zum Klemmen mindestens zweier Randbereiche (555) des auf dem Werkstückträger ausgebildeten insgesamt konvexen Körpers (140) auf der Oberfläche des Werkstückträgers (138) durch Klemmen jedes Randbereichs (555) zwischen der Klemmvorrichtung (501) und dem Werkstückträger (250) vor dem Umformen durch die Nachformvorrichtung (250),
wobei die Klemmvorrichtung während der Umformung durch die Nachformvorrichtung (250) zum Vermeiden oder Verringern von Faltenbildung eine Verschiebung oder Nachrutschen einzelner Fasern aus dem Randbereich des Körpers (140) in ihrer Längsrichtung erlaubt.

6. Vorrichtung nach Anspruch 5, bei der der Werkstückträger einen flexiblen Bereich (40) aufweist, der sowohl eine konvexe als auch eine konkave Oberfläche ausbilden kann.

7. Vorrichtung nach Anspruch 5 oder 6, bei der
die Klemmvorrichtung (150) als ein mit Fluid befüllbarer Balg (54) ausgebildet ist.

8. Vorrichtung nach einem der Ansprüche 5 bis 7, bei der
die Nachformvorrichtung (250) ein Nachformoberwerkzeug (340) aufweist, das einen flexiblen Balg aufweist, der eine zu dem umzuformenden Bereich (141) komplementäre Form und eine zu dem umgeformten Bereich (220) komplementäre Form annehmen kann.

## Claims

1. Method for manufacturing of three-dimensional fiber fabrics and component preforms made from fibers, including the following steps:
forming an overall convex body (140) made from a fiber fabric by laying down fibers on a surface of a workpiece carrier (138) of a re-molding device (250),
after forming of the overall convex body (140) made from the fiber fabric, clamping at least two edge regions (555) of the overall convex body (140) made from the fiber fabric on the surface of the workpiece carrier (138) by clamping each edge region (555) between a clamping device (501) and the workpiece carrier (138), and
reshaping a to-be-reshaped region (141), which lies between the edge regions (555), of the overall convex body (140) into a reshaped region (220) having at least one concave section by using the re-molding device (250),
wherein:
the surface area of the reshaped region (220) is greater than the surface area of the to-be-reshaped region (141) and/or at least the segment of a fiber (13) that forms the reshaped region (220) of the body (140) has a length that is greater than the length of the segment of the same fiber that forms the to-be-reshaped region (141) of the body (140) and/or, in a cross-sectional view, the path of a surface of the to-be-reshaped region (141) is represented by a first line, and in a cross-sectional view, the path of the same surface of the reshaped region (220) is represented by a second line, and the first line is shorter than the second line, the clamping is performed before the reshaping, and
during the reshaping step, individual fibers (13) of the fiber fabric, which extend through the reshaped region (220), are displaced in their longitudinal direction or slip from at least one of the edge regions of the body (140) to prevent or reduce crease formation.

2. Method according to claim 1, wherein
the clamping is effected by a bag or tube (54), which is fillable with fluid and is thereby expandable, so that individual fibers (13) between the clamping device (501) and the re-molding device (250) can be redrawn.

3. Method according to claim 2, wherein
the workpiece carrier (138) includes a concave zone (128) in the surface on which the fibers are laid, and
the fibers span the concave zone (128) during the laying of the fibers on the surface of the workpiece carrier (138) in a laying cycle, wherein
in the reshaping step, the fibers are pressed by a die (340), which is complementary to the concave zone (128), onto the surface of the concave zone (128) and are connected to the surface of the concave zone (128); the die (340) is subsequently removed again and thus an overall convex body (142) with a concave region (220) is formed.

4. Method according to claim 1 or 2, wherein
the reshaping is effected by a flexible region (63), which is variably deformable between a shape complementary to the to-be-reshaped region (141) of the body (140) and a shape complementary to the reshaped region (220).

5. Device for manufacturing of three-dimensional fiber fabrics and component preforms made from fibers, including
a robot (1), to which a laying head (2) is attached for laying fibers on a workpiece carrier (138) of a re-molding device (250) for forming a body (140), which body (140) is convex overall as viewed in the laying direction, and which body (140) includes at least one to-be-reshaped convex, or convex and flat, region (141),
the re-molding device (250), which is adapted to reshape the at least one to-be-reshaped region (141) into a reshaped region (220) having at least one concave section, and
a clamping device (501), which is adapted to clamp at least two edge regions (555) of the overall convex body (140) which is formed on the workpiece carrier on the surface of the workpiece carrier (138) by clamping each edge region (555) between the clamping device (501) and the workpiece carrier (138) before the reshaping by the re-molding device (250), wherein the clamping device is adapted to allow a displacement or slippage of individual fibers from the edge region of the body (140) in their longitudinal direction, while the reshaping by the re-molding device (250), to prevent or reduce crease formation.

6. Device according to claim 5, wherein
the workpiece carrier includes a flexible region (40), wherein the flexible region (40) is capable of forming both a convex surface and a concave surface.

7. Device according to claim 5 or 6, wherein
the clamping device (150) is configured as a bag (54), which is fillable with fluid.

8. Device according to one of claims 5 to 7, wherein
the re-molding device (250) includes a re-molding upper tool (340) that includes a flexible bag, which is capable of assuming a shape complementary to the to-be-reshaped region (141) and a shape complementary to the reshaped region (220).

## Revendications

1. Procédé de fabrication de nappes de fibres tridimensionnelles et de préformes de pièces en fibres, comprenant les étapes suivantes :
réalisation d'un corps généralement convexe (140) à partir d'une nappe de fibres en déposant des fibres sur une surface d'un support de pièce (138) d'un dispositif de postformage (250),
après la réalisation du corps généralement convexe (140) à partir de la nappe de fibres, serrage d'au moins deux zones de bord (555) du corps généralement convexe (140) à partir de la nappe de fibres sur la surface du support de pièce en serrant chaque zone de bord (555) entre un dispositif de serrage (501) et le support de pièce (138),
transformation d'une zone à transformer (141) située entre les zones de bord (555) du corps généralement convexe (140) à partir de la nappe de fibres en une zone transformée (220) avec au moins une section concave par le dispositif de postformage (250), dans lequel la superficie de la zone transformée (220) est supérieure à la superficie de la zone à transformer (141) et/ou au moins la section d'une fibre (13), qui réalise la zone transformée (220) du corps (140), présente une longueur qui est supérieure à la longueur de la section de cette même fibre qui réalise la zone à transformer (141) du corps (140) et/ou la continuité d'une surface de la zone à transformer (141) est représentée dans une vue en coupe transversale par une première ligne et la continuité de cette même surface de la zone transformée (220) étant représentée dans la vue en coupe transversale par une seconde ligne et la première ligne est plus courte que la seconde ligne,
le serrage est effectué avant la transformation, et
lors de la transformation, des fibres individuelles (13) de la nappe de fibres, qui passent à travers la zone transformée (220), sont déplacées dans leur direction longitudinale pour éviter ou réduire la formation de plis, ou glissent à partir d'une zone de bord du corps (140).

2. Procédé selon la revendication 1, dans lequel le serrage est effectué par un soufflet ou un tuyau (54) pouvant être rempli de fluide et pouvant ainsi se dilater, de sorte que des fibres individuelles (13) peuvent être resserrées entre le dispositif de serrage (501) et le dispositif de postformage (250).

3. Procédé selon la revendication 2, dans lequel le support de pièce (138) présente une zone concave (128) dans la surface sur laquelle les fibres sont déposées,
les fibres recouvrent la zone concave (128) lors du dépôt des fibres sur la surface du support de pièce (138) dans un cycle de dépôt, dans lequel
les fibres sont pressées sur la surface de la zone concave (128) lors de l'étape de transformation par un poinçon (340) adapté à la zone concave (128) et sont reliées à la surface de la zone concave (128), le poinçon (340) est ensuite à nouveau retiré et un corps généralement convexe (142) est ainsi réalisé avec une zone concave (220).

4. Procédé selon la revendication 1 ou 2, dans lequel la transformation est effectuée par une zone flexible (63) qui peut être déformée entre une forme complémentaire de la zone à transformer (141) du corps (140) et une forme complémentaire de la zone transformée (220).

5. Dispositif de fabrication de nappes de fibres tridimensionnelles et de préformes de pièces en fibres, avec
un robot (1), sur lequel une tête de pose (2) destinée à déposer des fibres sur un support de pièce (138) d'un dispositif de postformage (250) pour réaliser un corps généralement convexe (140) lorsqu'il est vu dans la direction de la dépose est fixé avec au moins une zone à transformer convexe ou convexe et plate (141),
le dispositif de postformage (250), qui est adapté pour transformer au moins la zone à transformer (141) en une zone transformée (220) avec au moins une zone concave,
un dispositif de serrage (501), qui est adapté pour serrer au moins deux zones de bord (555) du corps généralement convexe (140) réalisé sur le support de pièce sur la surface du support de pièce (138) par le serrage de chaque zone de bord (555) entre le dispositif de serrage (501) et le support de pièce (250) avant la transformation par le dispositif de postformage (250),
dans lequel le dispositif de serrage permet un déplacement ou un glissement de fibres individuelles à partir de la zone de bord du corps (140) dans sa direction longitudinale pendant la transformation par le dispositif de postformage (250) afin d'éviter ou de réduire la formation de plis.

6. Dispositif selon la revendication 5, dans lequel le support de pièce présente une zone flexible (40) qui peut aussi bien réaliser une surface convexe que concave.

7. Dispositif selon la revendication 5 ou 6, dans lequel le dispositif de serrage (150) est réalisé en tant que soufflet (54) pouvant être rempli avec du fluide.

8. Dispositif selon l'une quelconque des revendications 5 à 7, dans lequel le dispositif de postformage (250) présente un outil supérieur de postformage (340), qui présente un soufflet flexible qui peut prendre une forme complémentaire à la zone à transformer (141) et une forme complémentaire à la zone transformée (220).
